# EUROPEAN PATENT SPECIFICATION

(11) **EP 1 621 806 B1**
(45) Date of publication and mention of the grant of the patent: **22.08.2007**
(21) Application number: 05380146.0
(22) Date of filing: 01.07.2005
(51) Int. Cl.: F16K 24/04, B60K 15/035, E03B 7/02, F16K 17/24

(54) **Valve for purging air in the filling and admission thereof during the emptying of pressurized liquid from flow ducts**
Ventil für das Bereinigen der Luft in der Füllung und in der Aufnahme davon während des Leerens der unter Druck gesetzten Flüssigkeit von den Durchflusskanälen
Valve pour purger l'air dans le remplissage et l'admission pendant le vidage du liquide pressurisé des conduits d'écoulement

(30) Priority: 28.07.2004 ES 200401834 U
(43) Date of publication of application: 01.02.2006
(73) Proprietor: Jimten, S.A., 03006 Alicante (ES)
(72) Inventor: Peréz Salas, Juan José, 03010 Alicante (ES); Navarro Arcas, Abel Riquelme, 03009 Alicante (ES)
(74) Representative: Ungria Lopez, Javier

(56) References cited:
- EP-A- 0 257 811
- EP-A- 0 724 098
- EP-A- 1 124 083
- DE-U1- 29 620 494
- US-A- 6 145 533

## Description

### OBJECT OF THE INVENTION

As expressed in the title of this specification, the present invention refers to a valve for purging air in the filling and admission thereof during the emptying of pressurized liquid flow ducts, which has a float system and a membrane connected to each other in order to permit the removal of air accumulated and/or produced in pressurized liquid flow ducts, permitting in the case of a reduction of pressure the intake of air, so that adequate performance of certain ducting parts, such as filters, etc., is achieved.

The purpose of the invention is to provide the corresponding sector in particular and the public in general, with a valve of the above-cited type, but with some particular characteristics from which greater structural simplicity of the valve, more efficient operation, and, in turn, some better performance qualities with respect to other valves having the same function are derived.

### BACKGROUND OF THE INVENTION

Numerous types of valves that are assembled in pressurized water or liquid flow ducts are known. Their purpose is to eliminate small amounts of air that are accumulated or produced in the ducts themselves. In some cases, these valves are made in such a way that they also permit the outflow of large amounts of air. These valves that permit to eliminate small amounts of air, and, at the same time, the outflow of large amounts of air are the so-called "double effect" valves.

In this sense, one can cite European patent publication number 0257811, wherein a flow control valve is described. This valve is to be assembled in liquid flow ducts and is designed to ensure the leaking of air or other gases produced in the duct itself, all for the purpose of preventing the production of air pockets that could interfere, for example, in the flowing of the liquid.

The valve described in said European patent is designed to remove small amounts of air as well as large amounts of air that is normally carried out by independent valves, called "automatic valve" in the first case and "kinetic valve" in the second case.

By means of the valve described in that European patent the two cited functions are achieved, by using a double air outlet, one for small amounts of air and the other one for large amounts of air, using a flexible sealing membrane as an opening and closing means. This membrane is fastened by two of its edges to the frame of the valve and to the float included inside the valve, whose upward and downward movement involves the closing of the opening by the flexible membrane which is placed on the air outlet.

Likewise, one can cite a second European patent publication number 0724098, based on the same operating principle as the above-cited one, but with a different embodiment, wherein the flexible membrane is fastened by only one of its edges.

Document US 6145533 discloses an air release valve comprising a hosing having a fluid inlet and a fluid outlet, a valve plate within the housing between the inlet and the outlet, the valve plate having a pair of apertures; a valve seal assembly including a seal engageable with the valve plate overlying the apertures; a float located in the housing upstream of the valve plate and connected to the seal, the float displaceable of the float positions in the housing such that displacement of the float in one direction opens the apertures, the float having a truncated substantially flat bottom surface and a groove extending across the flat bottom surface. The seal assembly comprises essentially one-piece rubber body or plate with a steel insert. The sealing portion is "outlined" by a raised bead which defines a larger rectangular seal portion and a narrow tongue-like seal portion, adapted to cover both apertures respectively. The rectangular portion is reinforced by a rigid stainless steel plate which is embedded within the rubber body, i.e., the plate is placed in the seal assembly mold and the rubber body is formed about the plate.

### DESCRIPTION OF THE INVENTION

The valve object of the invention has some basic characteristics like the ones cited in the preceding section, but with a series of innovations from which structural and functional advantages with respect to the type of valves described in the European patents alluded to before are derived.

In this sense, the valve in question is comprised, since it is a conventional valve, of a hollow body defined by the coupling by means of threading of two parts, one of which is provided with a coupling for the fluid intake. Inside the hollow body, there is a float connected to a flexible membrane which in a normal position presses, by thrust of the fluid on the float, against a valve seat, closing the air outlet, whereas when air is produced the float moves in the opposite direction by the effect of the difference of density, separating the membrane from the whole or from the seat thereof, allowing the outflow of air.

From the cited structure, a first novel characteristic of the valve of the invention is centered on the fact that the air outlet is a single grooved-form hole, through which air comes out in small amounts or the air comes out in large amounts, with the particularity that this outlet extends outside on a neck with an inside thread in order to permit the coupling of other outside devices, for example, for the ducting of possible leaks of liquid during normal operation of the valve.

Another novel characteristic is centered on the structure and form of assembly of the flexible membrane, which has some protrusions and some projections for resting on the top flat part of the float, specifically on the side top part of the float, since the outlet upon which the membrane is positioned is located obliquely. Hence, the membrane should be assembled obliquely, specifically on a chamfered surface of the float, a surface, which is defined as a side top surface.

The above-cited protrusions and projections define a means for optimum positioning of the membrane, as well as efficient operation thereof.

Another novel characteristic is that the cited flexible membrane has one of its edges cylindrically thickened for tight coupling and by sliding in the top channel (as one can see in the attached drawings) established for this purpose in the top end area of the side top part of the float, all in such a way that the valve fastened by the top end will carry out the function of removing air when the duct is pressurized or will allow the intake of air when the duct is depressurized in order to prevent the collapsing of the parts. In this way, it carries out a function of protecting the installation.

Another novel characteristic of the valve lies on the shape of the float, which is formed by an elongated body with an aerodynamic design. The body of the valve occupies a large part of the hollow. Some special passages that favor the correct flow of air towards the top part, in other words, towards the part where the air outlet is located, are defined between the float and the wall of the valve body.

On the other hand, the cited float has some guiding means for the coupling or correct assembly thereof inside the valve body. The guiding means are comprised of (male) protrusions complementary of the (female) channels provided for this purpose on the inside side surface of the part of the valve body, which prevents the float from being incorrectly put in place.

### BRIEF DESCRIPTION OF THE DRAWINGS

In order to complete the description that is going to be made and in order to provide a better understanding of the characteristics of the invention, the present specification is accompanied by a series of drawings on the basis of which the innovations and advantages of the valve object of the invention will be more easily understood.

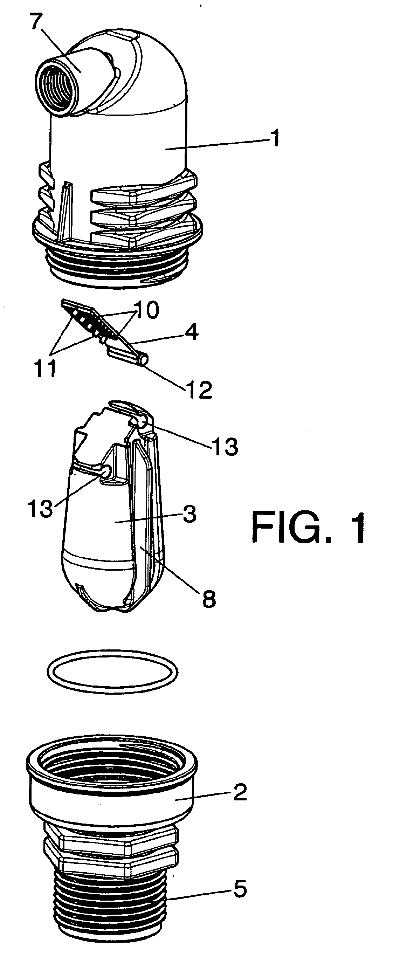

Figure 1 shows a view according to an exploded perspective view of the different parts that form part of the structure of the valve object of the invention.

Figure 2 is a raised view of the valve formed by means of the parts represented in the preceding figure.

Figure 3 is a sectional view corresponding to the A-A line of the preceding figure, with the flexible membrane in the closed position of the air outlet.

Figure 4 shows another sectional view like the one in the preceding figure, but in this case with the membrane separated from the air outlet, permitting air to be removed.

### DESCRIPTION OF THE PREFERRED EMBODIMENT

In view of the commented figures, one can see how the valve of the invention is formed by the coupling between two parts (1) and (2), defining a hollow body inside of which a float (3) is assembled. A flexible membrane (4) is assembled on the float, in such a way that the part (2) has a threaded extension (5) defining a coupling means for the intake of fluid into the general body of the valve.

In the side top area of the part (1) corresponding to the valve body, a hole (6) is defined, according to an oblique arrangement, for the removal of air. Following said hole the valve body has an outside extension defining a neck (7) with an inside thread in order to couple devices, for example, for collecting water that might be expelled with the air, etc.

The float (3) has side protrusions (8) that in the assembly thereof inside the valve body are guided in channels (9) established for this purpose on the inside surface of the part (1) corresponding to the valve body. Thus, an effective and simple means that prevents the float (3) from being incorrectly assembled is established.

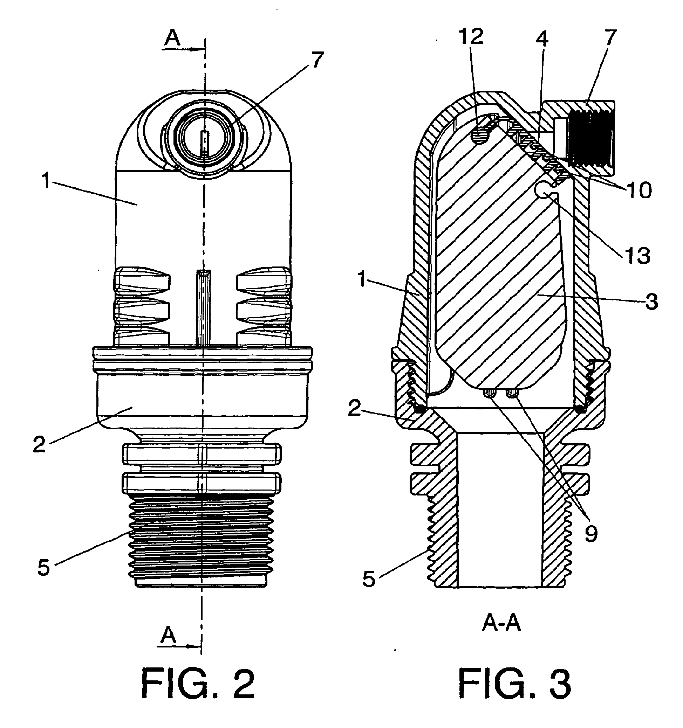

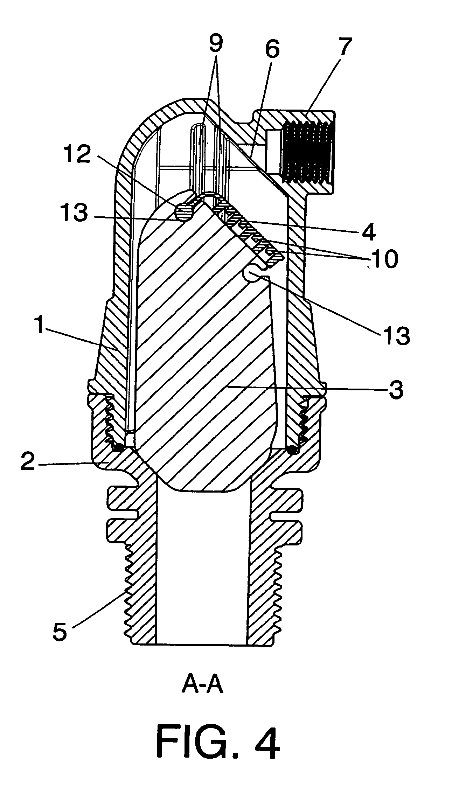

As to the flexible membrane (4), it has some protrusions (10) and some projections (11) in order to rest on the side top part of the float (3), defining an effective, simple and optimum means for positioning and assembling said flexible membrane (4) on the float (3), just as it is represented in figures 3 and 4. Besides there is the particularity that the cited membrane (4) has in one of its opposite edges a cylindrical thickening (12) used to house, in a complementary cavity (13) formed for this purpose in the corresponding part of the float (3). Hence, the flexible membrane (4) remains perfectly fastened to the float (3).

In this way, when there is no air in the duct where the described valve is assembled, the float (3) will rise by thrust of the liquid fluid. The flexible membrane (4) positions itself on the seat of the hole (6) established in the valve body, thus closing this outlet. Now then, when air is produced in the duct, said air by virtue of the aerodynamic shape of the float (3), flows perfectly towards the top part. The air accumulates until the amount of air suffices so that, by a difference of densities, the float slides down over the guides, releasing the outlet, thus causing the air accumulated in the top part to be purged. Once sufficient air has been removed, the fluid rises again pushing the float in this way until it causes the closing of the valve.

## Claims

1. Valve for purging air in the filling and admission thereof during the emptying of the pressurized liquids from flow ducts, comprising a hollow body defined by the coupling of two parts (1 and 2), one of which is provided with a coupling neck (5) for the intake of fluid, and the other one is provided with an air outlet (6), established on an oblique valve seat, including an inside float (3) to which a flexible membrane (4) that rests on the seat of the air outlet (6) is connected, by the thrust that the fluid exerts on said float (3), closing this air outlet (6), whereas when air is produced in the duct, the float (3) is caused to slide in the opposite direction, separating the membrane (4) from the outlet (6) in order to permit the removal of air; a cylindrical protrusion (12) having been provided on one of the edges of the flexible membrane (4) for the fastening thereof by sliding in a top channel (13) established for this purpose in the float itself (3), said valve carrying out the so-called "double effect",
**characterized in that**
the flexible membrane (4) is formed by a body with some protrusions (10) and some projections (11) by which the membrane rests on a flat surface of the float (3), permitting a correct and adequate positioning and operating of said flexible membrane (4).

2. Valve for purging air in the filling and admission thereof during the emptying of pressurized liquid from flow ducts, according to claim 1, **characterized in that** the float (3) is comprised of an aerodynamic body which occupies a large part of the hollow corresponding to the valve body in order to define some optimum flow passages of the air towards the top part of the valve body where the air outlet (6) is made.

3. Valve for purging air in the filling and admission thereof during the emptying of pressurized liquid from flow ducts, according to preceding claims, **characterized in that** the float (3) has in the sides some protrusions (8) complementary of recesses (9) provided for the inside surface of the wall of the valve body, for the correct coupling and assembly of the float (3) inside the valve body.

4. Valve for purging air in the filling and admission thereof during the emptying of pressurized liquid from flow ducts, according to the preceding claims, **characterized in that** the air outlet (6) has a neck-type extension (7), the neck being provided with inside thread in order to permit the coupling of outside devices to collect leaks of water and the like.

## Patentansprüche

1. Ventil für das Bereinigen der Luft in der Füllung und in der Aufnahme davon während des Entleerens von Druckflüssigkeit aus Durchflusskanälen, mit einem durch Verbinden von zwei Teilen (1 und 2) gebildeten Hohlkörper, wobei eines der Teile mit einem Anschlussteil (5) für das Einbringen von Flüssigkeit und das andere Teil versehen ist mit einem auf einem schräg gestellten Ventilsitz ausgebildeten Luftauslass (6), einem inneren Schwimmer (3) mit welchem eine flexible Membran (4) verbunden ist, welche durch die von der Flüssigkeit auf den Schwimmer ausgeübte Kraft den Luftauslass schließend am Sitz des Luftauslasses (6) anliegt, jedoch wenn Luft in dem Durchflusskanal erzeugt ist, der Schwimmer (3) zu einer Bewegung in die Membran (4) von dem Luftauslass (6) trennende Gegenrichtung veranlasst wird, um den Austrag von Luft zu gestatten; mit einem an einer der Kanten der flexiblen Membran (4) vorgesehenen zylindrischen Vorsprung (12) zum Befestigen der Membran durch Einschieben in einen oberen Kanal (13) der zu diesem Zweck in dem Schwimmer (3) selbst ausgebildet ist, wobei das Ventil den sogenannten "Doppeleffekt" ausübt,
**dadurch gekennzeichnet; dass**
die flexible Membran (4) aus einem Körper mit einigen Vorsprüngen (10) und einigen Ansätzen (11) besteht, mit deren Hilfe die Membran auf einer ebenen Oberfläche des Schwimmers (3) ruht und eine korrekte und adäquate Positionierung und Betätigung der flexiblen Membran (4) gestattet.

2. Ventil für das Bereinigen der Luft in der Füllung und in der Aufnahme davon während des Entleerens von Druckflüssigkeit aus Durchflusskanälen nach Anspruch 1,
**dadurch gekennzeichnet, dass**
der Schwimmer (3) aus einem aerodynamischen Körper besteht, welcher einen Großteil des dem Ventilkörper entsprechenden Hohlraumes einnimmt, um einige optimale Luftströmungswege in Richtung zu dem oberen Abschnitt des Ventilkörpers zu definieren, wo der Luftauslass (6) vorgesehen ist.

3. Ventil für das Bereinigen der Luft in der Füllung und in der Aufnahme davon während des Entleerens von Druckflüssigkeit aus Durchflusskanälen nach vorhergehenden Patentansprüchen,
**dadurch gekennzeichnet, dass**
der Schwimmer (3) in den Seiten einige Vorsprünge (8) aufweist, welche komplementär zu Ausnehmungen (9) in der Innenoberfläche der Ventilkörperwandung vorgesehen sind, um den Schwimmer (3) im Inneren des Ventilkörpers korrekt zu verbinden und zu montieren.

4. Ventil für das Bereinigen der Luft in der Füllung und in der Aufnahme davon während des Entleerens von Druckflüssigkeit aus Durchflusskanälen nach den vorangehenden Patentansprüchen,
**dadurch gekennzeichnet, dass**
der Luftauslass (6) eine zapfenartige Verlängerung (7) aufweist und der Zapfen mit Innengewinde versehen ist, um das anschließend von äußeren Vorrichtungen zum Auffangen von Leckwasser oder dergleichen zu gestatten.

## Revendications

1. Soupape pour la purge de l'air dans le remplissage et l'admission de celui-ci pendant le vidage des liquides sous pression de conduites d'écoulement, comportant un corps creux défini par l'accouplement de deux parties (1 et 2), dont l'une est pourvue d'un raccord (5) pour l'admission de fluide, et l'autre est pourvue d'une sortie d'air (6), établie sur un siège de soupape oblique, comprenant un flotteur intérieur (3) auquel est relié une membrane flexible (4) qui repose sur le siège de la sortie d'air (6), grâce à la poussée que le fluide exerce sur ledit flotteur (3), en fermant cette sortie d'air (6), alors que, lorsque de l'air est produit dans la conduite, le flotteur (3) est amené à coulisser dans la direction opposée, en séparant la membrane (4) de la sortie (6) afin de permettre l'évacuation de l'air; une saillie cylindrique (12) ayant été prévue sur un des bords de la membrane flexible (4) pour la fixation de celle-ci par coulissement dans un canal supérieur (13) établi dans ce but dans le flotteur (3) lui-même, ladite soupape réalisant ce que l'on appelle un « double effet »,
**caractérisée en ce que**
la membrane flexible (4) est formée par un corps avec certaines extensions (10) et certaines saillies (11) grâce auxquelles la membrane repose sur une surface plate du flotteur (3), en permettant un positionnement et un fonctionnement correct et adéquat de ladite membrane flexible (4).

2. Soupape pour la purge de l'air dans le remplissage et l'admission de celui-ci pendant le vidage des liquides sous pression de conduites d'écoulement, selon la revendication 1, **caractérisée en ce que** le flotteur (3) se compose d'un corps aérodynamique qui occupe une grande partie du creux correspondant au corps de soupape afin de définir certains passages d'écoulement optimal de l'air vers la partie supérieure du corps de soupape où est réalisée la sortie d'air (6).

3. Soupape pour la purge de l'air dans le remplissage et l'admission de celui-ci pendant le vidage des liquides sous pression de conduites d'écoulement, selon les revendications précédentes, **caractérisée en ce que** le flotteur (3) a dans les côtés certaines extensions (8) complémentaires de renfoncements (9) prévues pour la surface intérieure de la paroi du corps de soupape, pour l'accouplement et l'assemblage corrects du flotteur (3) à l'intérieur du corps de soupape.

4. Soupape pour la purge de l'air dans le remplissage et l'admission de celui-ci pendant le vidage des liquides sous pression de conduites d'écoulement, selon les revendications précédentes, **caractérisée en ce que** la sortie d'air (6) a une extension de raccord (7), le raccord étant pourvu d'un filetage intérieur afin de permettre l'accouplement de dispositifs extérieurs de façon à recueillir les fuites d'eau et équivalent.
